# FASCICULE DE BREVET EUROPEEN

(11) **EP 1 395 976 B1**
(45) Date de publication et mention de la délivrance du brevet: **03.11.2004**
(21) Numéro de dépôt: 02751243.3
(22) Date de dépôt: 07.06.2002
(51) Int. Cl.: G10G 1/02, G09B 15/00

(54) **PROCEDE ET DISPOSITIF D'AIDE A LA COMPOSITION OU AU JEU MUSICAL**
HILFSVORGANG UND -GERÄT ZUM KOMPONIEREN ODER SPIELEN EINES MUSIKSTÜCKES
METHOD AND DEVICE FOR ASSISTING MUSICAL COMPOSITION OR GAME

(30) Priorité: 11.06.2001 FR 0107573
(43) Date de publication de la demande: 10.03.2004
(73) Titulaire: Audigane, Serge, 49530 Lire (FR)
(72) Inventeur: Audigane, Serge, 49530 Lire (FR)
(74) Mandataire: Laget, Jean-Loup
(86) Numéro de dépôt international: PCT/FR2002/001948
(87) Numéro de publication internationale: WO 2002/101716

(56) Documents cités:
- WO-A-97/46991
- DE-A- 4 002 361
- DE-A- 4 421 378
- US-A- 5 266 735

## Description

La présente invention concerne un procédé d'aide à la composition ou au jeu musical pour jouer en harmonie une mélodie quelconque sur un instrument, ainsi qu'un instrument et un dispositif associé à un instrument pour la mise en oeuvre du procédé.

Jouer en harmonie une mélodie quelconque avec les accords correspondants à chaque note de la mélodie suppose une longue pratique et de bonnes connaissances musicales. Il en est de même pour établir le ou les accompagnements correspondants à une mélodie quelconque lorsque l'on souhaite faire jouer plusieurs instruments simultanément. Du fait de ces contraintes, l'improvisation de morceaux musicaux incluant une mélodie et un accompagnement est aujourd'hui réservée aux musiciens chevronnés.

On connaît par le brevet allemand DE-A-4.002.361 un procédé qui consiste, à partir d'une note de tonalité, à afficher les accords correspondants en fonction du mode majeur, mineur ou autre sélectionné. Cependant, il n'est pas possible d'afficher les notes de mélodie autorisées puis d'afficher dans un second temps, à partir d'une note de mélodie autorisée, l'accord correspondant en fonction de la note de mélodie sélectionnée. Ainsi, dans un premier mode de réalisation, on propose une réglette constituée d'un panneau portant une pluralité de séries de notes sous forme de colonnes. Ce panneau est mobile à l'intérieur d'un étui pourvu de fenêtres d'affichage. Ainsi, en fonction de la note de tonalité choisie par déplacement du panneau à l'intérieur de l'étui, s'affichent les accords en mode mineur et majeur notamment. Ce même principe est repris dans un deuxième dispositif constitué de quatre disques rotatifs montés sur un support commun. Le disque relatif au choix de la note de tonalité peut être couplé en déplacement aux autres disques de manière à faire apparaître, à travers des fenêtres de lecture, les accords correspondant pour chacun des disques, chaque disque étant associé à un mode déterminé. Un tel procédé ne permet donc pas d'établir un lien direct entre la note de la mélodie jouée et l'accord correspondant.

Un but de la présente invention est de proposer un procédé dont la mise en oeuvre, sur un instrument ou un dispositif associé à un instrument, permet à un joueur débutant de jouer en harmonie un morceau musical quelconque incluant une mélodie de son choix et l'accompagnement correspondant sans aucune connaissance théorique des accords.

Un autre but de la présente invention est de proposer un procédé dont la mise en oeuvre permet à un groupe de joueurs, tel qu'un orchestre, d'identifier instantanément, à partir d'une mélodie quelconque improvisée, l'accompagnement correspondant.

Un autre but de la présente invention est de proposer un instrument dont la conception permet à un joueur débutant d'improviser des morceaux incluant une mélodie quelconque et l'accompagnement correspondant.

Un autre but de la présente invention est de proposer un dispositif associé à un instrument dont la conception permet à l'utilisateur de l'instrument d'identifier sans effort l'accompagnement correspondant à la mélodie improvisée qu'il joue, cet accompagnement pouvant être mis en oeuvre sur l'instrument lui-même ou sur d'autres instruments.

A cet effet, l'invention a pour objet un procédé d'aide à la composition ou au jeu musical pour jouer en harmonie une mélodie quelconque sur un instrument de musique du type comprenant au moins une étape au cours de laquelle on saisit ou on sélectionne, sur l'instrument de musique ou sur un dispositif associé à l'instrument de musique, une note correspondant à la tonalité du morceau devant être joué, suivie d'une étape dans laquelle l'instrument de musique ou le dispositif associé repère ou affiche, en fonction de la note de tonalité saisie ou sélectionnée, une première plage de notes, dites notes de mélodie, correspondant à la plage de notes autorisée pour établir une mélodie, procédé caractérisé en ce que, en outre, à chaque actionnement sur l'instrument de musique d'une note de mélodie dans la plage de notes de mélodie autorisées, l'instrument de musique ou le dispositif associé affiche ou repère sélectivement, en fonction de la note de tonalité saisie ou sélectionnée et de la note de mélodie actionnée à l'intérieur de la plage de notes de mélodie autorisée, une série de notes formant un accord correspondant à la note de mélodie actionnée dans la plage de notes autorisée.

La mise en oeuvre d'un tel procédé sur un instrument ou un dispositif associé à un instrument par un joueur débutant permet à ce dernier d'improviser totalement une mélodie sous réserve de choisir les notes de mélodies à l'intérieur de la plage de notes autorisée et de disposer automatiquement de l'affichage de l'accord correspondant à chaque note de mélodie actionnée. Le joueur peut ainsi sans aucune réflexion jouer en harmonie une mélodie en y associant l'accompagnement correspondant.

Selon un mode de mise en oeuvre préférentiel du procédé, on saisit ou on sélectionne en outre le mode tel que le mode mineur ou majeur ou autre du morceau à jouer et en ce que l'instrument ou le dispositif associé repère ou affiche sélectivement en fonction de la note de tonalité et du mode saisis ou sélectionnés la plage de notes de mélodie autorisée et en fonction de la note de tonalité, du mode sélectionné et de la note de mélodie actionnée l'accord correspondant.

L'invention a encore pour objet un instrument de musique, notamment pour la mise en oeuvre du procédé du type précité, cet instrument de musique comportant des moyens de saisie ou de sélection d'une note de tonalité et éventuellement du mode mineur, majeur ou autre, des premiers moyens de repérage ou d'affichage sélectivement activables à partir de la note de tonalité saisie et éventuellement du mode mineur, majeur ou autre sélectionné pour indiquer visuellement à l'utilisateur la plage de notes de mélodie autorisée, caractérisé en ce qu'il comporte en outre au moins des seconds moyens de repérage ou d'affichage sélectivement activables par actionnement sur l'instrument de musique d'une note de mélodie choisie dans la plage de notes de mélodies autorisée, ces seconds moyens de repérage ou d'affichage indiquant à l'utilisateur, à chaque actionnement sur l'instrument de musique d'une note de mélodie dans la plage de notes autorisée, uniquement les notes d'accord correspondant à la note de mélodie actionnée.

L'invention a encore pour objet un dispositif associé à un instrument de musique, notamment pour la mise en oeuvre d'un procédé du type précité, ce dispositif comportant des moyens de saisie ou de sélection d'une note de tonalité et éventuellement du mode mineur, majeur ou autre, des premiers moyens de répérage ou d'affichage prédéterminés fonction de la note de tonalité saisie ou sélectionnée et éventuellement du mode sélectionné pour indiquer visuellement à l'utilisateur une plage de notes de mélodie autorisée sur l'instrument de musique, caractérisé en ce qu'il comporte en outre au moins des seconds moyens de repérage ou d'affichage sélectivement activables par actionnement sur l'instrument de musique d'une note de mélodie choisie dans la plage de notes de mélodie autorisée, ces seconds moyens de repérage ou d'affichage indiquant à l'utilisateur, à l'état activé, l'accord correspondant à la note de mélodie actionnée à l'intérieur de la plage de notes de mélodie autorisée.

L'invention sera bien comprise à la lecture de la description suivante d'exemples de réalisation, en référence aux dessins annexés dans lesquels :
la figure 1 représente de manière schématique la détermination, à partir d'une note de tonalité, des accords et des notes de mélodie correspondantes à partir de la gamme chromatique ;
la figure 2 représente les différents accords pouvant être obtenus un mode majeur à partir du procédé réprésenté à la figure 1 ;
la figure 3 représente une vue schématique en perspective du clavier à touches d'un piano équipé d'un dispositif de compensation des différences de niveaux entre touches et d'un support associé destiné à venir se positionner sur ledit clavier ;
la figure 4 représente une vue schématique du dispositif de compensation de la figure 3 à l'état non positionné sur un clavier ;
la figure 5 représente une vue de dessous d'un support destiné à venir se positionner sur un clavier à touches d'un piano :
la figure 6 représente une vue schématique de détail en coupe des organes équipant le support en position sur une touche ou le dispositif de compensation positionné sur le clavier et
la figure 7 représente une vue schématique d'un manche de guitare et d'un dispositif associé audit manche.

Le procédé, objet de l'invention, comporte trois étapes essentielles.

La première étape consiste en la saisie ou en la sélection, sur l'instrument ou sur un dispositif associé à l'instrument, d'une note correspondant à la tonalité du morceau devant être joué et éventuellement du mode tel que le mineur, majeur ou autre de ce morceau.

Dans une seconde étape, l'instrument ou le dispositif associé repère ou affiche, en fonction de la note de tonalité et éventuellement du mode saisi ou sélectionné, une première plage de notes, dites notes de mélodie, correspondant à la plage de notes autorisée pour établir une mélodie.

Dans une troisième étape, l'instrument ou le dispositif associé affiche ou repère sélectivement, en fonction de la note de tonalité saisie ou sélectionnée, de la note de mélodie actionnée et éventuellement du mode sélectionné si cette fonction existe, une série de notes formant un accord correspondant à la note de la mélodie actionnée dans la plage de notes autorisée. Cet accord peut encore être appelé accompagnement. Ainsi, dans le cas d'un instrument du type constitué d'un clavier à touches, les notes de mélodie correspondront aux notes jouées par la main droite de l'utilisateur tandis que les notes des accords correspondront aux notes jouées par la main gauche de l'utilisateur. Ainsi, lorsque l'utilisateur jouera à la main droite une succession de notes de mélodie suivant un ordre aléatoire, l'accord correspondant s'affichera pour chaque note de mélodie actionnée. L'utilisateur aura ainsi la possibilité d'improviser n'importe quel morceau tout en pouvant jouer simultanément des deux mains sans avoir aucune connaissance théorique des accords.

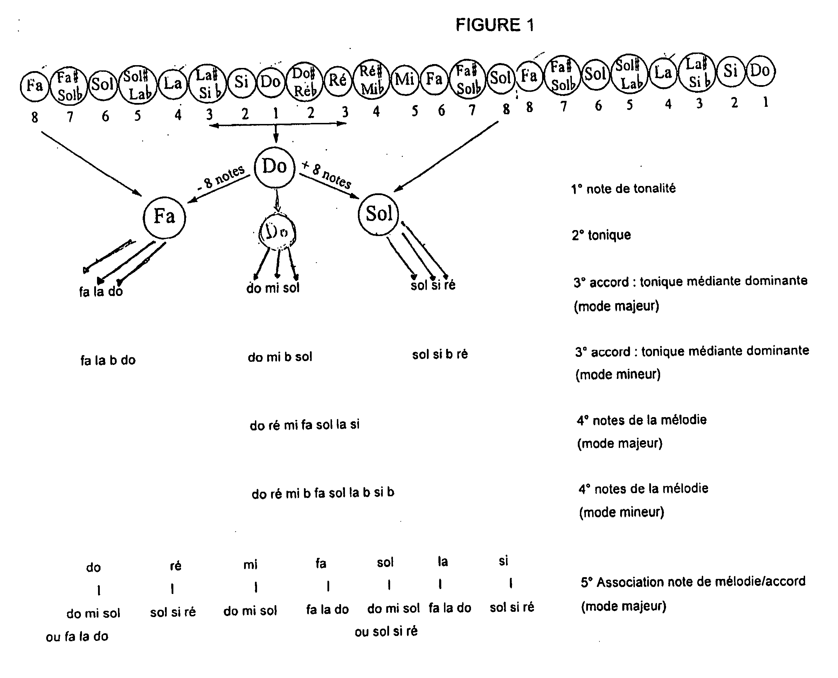

La détermination par l'instrument ou le dispositif des notes de mélodie d'une part et des notes d'accord d'autre part peut s'effectuer par différents moyens. Ainsi, l'instrument ou le dispositif associé peut déterminer par calcul, à partir de la note de tonalité saisie ou sélectionnée, les notes de mélodie et accords correspondants à repérer ou à afficher. Cette détermination pourra s'effectuer par calcul, notamment à partir de la gamme chromatique. Cette gamme est représentée à la figure 1.

Le principe de calcul est le suivant. L'instrument ou le dispositif associé sélectionne, à partir de la note de tonalité saisie ou sélectionnée, au moins deux autres notes, les trois notes correspondant chacune à la tonique d'un accord. Il sélectionne ensuite, à partir de chaque tonique et en fonction éventuellement du mode mineur ou majeur, la médiante et la dominante de l'accord. Les notes ainsi obtenues correspondent en outre à la plage de notes de mélodie autorisée. Il associe alors chaque note de mélodie à l'un des trois accords contenant la note de mélodie puis il détermine l'emplacement des notes de mélodie et des accords sélectionnés. Les notes de mélodie seront alors automatiquement affichées ou repérées tandis que les accords sélectionnés ne seront affichés ou repérés qu'après actionnement d'une note de mélodie et en correspondance de la note actionnée.

Comme l'illustre la figure 1, l'instrument ou le dispositif associé sélectionne, à partir de la note de tonalité, deux autres notes correspondant chacune respectivement à la huitième note en amont et en aval de la note de tonalité, note de tonalité incluse, sur la gamme chromatique. Ainsi, dans l'exemple représenté, la note de tonalité sélectionnée ou saisie par l'utilisateur est le do. A partir de cette note, l'instrument ou le dispositif associé détermine par calcul en utilisant la gamme chromatique que la huitième note disposée en amont de la note de tonalité, si l'on inclut dans ce chiffre la note de tonalité elle-même, est le fa, tandis que la huitième note disposée en aval de la note de tonalité, si l'on inclut à nouveau cette note de tonalité, est le sol. Ainsi, trois notes, à savoir fa, do, sol, sont sélectionnées et correspondent chacune à la tonique d'un accord. Pour établir à partir de chaque tonique la médiante et la dominante dudit accord, on utilise à nouveau la gamme chromatique en associant à chaque tonique, dans le cas du mode majeur, la cinquième note disposée en amont de la tonique pour identifier la médiante puis la quatrième note à partir de la médiante pour identifier la dominante. Ainsi, dans le cas d'une tonique correspondant au fa en mode majeur, la médiante et la dominante dudit accord sont respectivement constituées par le la et le do. En d'autres termes, on peut également mentionner que l'accord complet, constitué de trois notes, est obtenu en associant à chaque tonique la tierce et la quinte correspondante et ce en mode majeur. A l'inverse, en mode mineur, on associe à chaque tonique, la quatrième note disposée en aval sur la gamme chromatique pour déterminer la médiante puis on associe à chaque médiante la cinquième note disposée en aval sur la gamme chromatique pour déterminer la dominante. Ainsi, les accords obtenus en mode mineur correspondent pour les toniques et les dominantes aux notes obtenues en mode majeur alors que la médiante est en mode mineur abaissée d'un demi-ton par comparaison au mode majeur.

A partir de la détermination des accords, on peut établir en correspondance les notes de mélodie autorisées qui correspondent strictement à celles utilisées pour la formation des accords. Ainsi, dans le cas du choix d'une note de tonalité correspondant au do, les accords obtenus sont fa la do, do mi sol, sol si ré. Les notes de mélodie autorisées seront donc do, ré, mi, fa, sol, la, si. La même démonstration peut être effectuée en mode mineur. Les notes de mélodie autorisées seront donc do, ré, mi bémol, fa, sol, la bémol, si bémol.

Une fois les notes de mélodie et les accords déterminés, l'instrument associe alors, à chaque note de la mélodie, un accord. On remarque que, pour certaines notes de mélodie susceptibles de correspondre à plusieurs accords comme l'illustre la figure 1, l'instrument choisira de manière prédéterminée l'accord correspondant.

L'emplacement des notes de mélodie et des accords peut ensuite être déterminé par l'instrument. Les notes de mélodie seront généralement séparées des accords sélectionnés d'un nombre d'octave(s) ou d'intervalle(s).

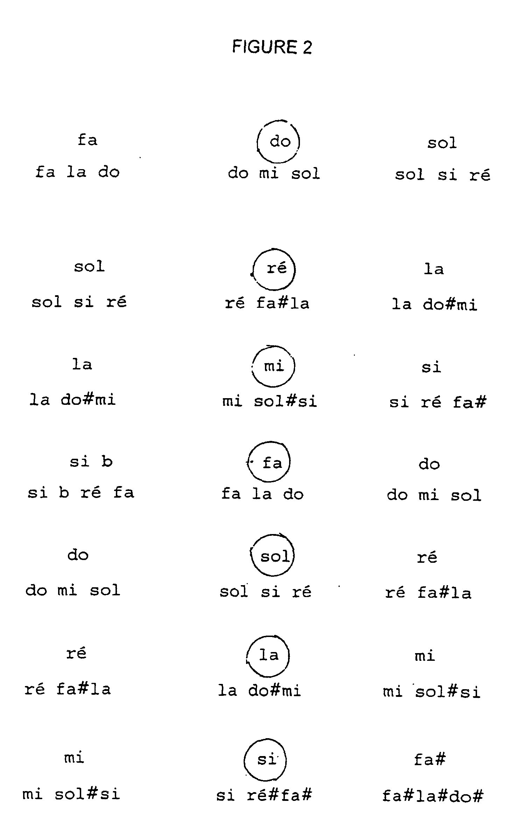

La démarche indiquée ci-dessus peut ainsi être reproduite pour une note de tonalité quelconque. On obtient ainsi, en mode majeur, les séries d'accords et par suite les notes de mélodie autorisées représentés à la figure 2 ou la tonalité correspond à la note entourée choisie par l'utilisateur.

Dans un autre mode de détermination des notes de mélodie et des notes d'accord à partir d'une note de tonalité, on procède comme suit. L'instrument ou le dispositif associé stocke en mémoire, pour chaque note de tonalité apte à être saisie ou sélectionnée, la plage des notes de mélodie autorisée et les accords correspondant à l'actionnement de chaque note de mélodie, comme l'illustre la dernière ligne de la figure 1. Il compare ensuite chaque note de tonalité saisie ou sélectionnée aux notes de tonalité stockées. Lorsque le résultat de la comparaison est positif, il repère ou affiche les notes de mélodie stockées en correspondance de la note de tonalité stockée et lors de l'actionnement d'une note de mélodie, l'accord de ladite note de mélodie. Dans encore un autre mode de détermination des notes de mélodie et des notes d'accord à partir d'une note de tonalité, on prépositionne sur un dispositif affectant la forme d'un support 1 au moins deux séries 2, 3 d'organes 4 de repérage correspondant pour une note de tonalité prédéterminée, l'une (série 3) à la plage de notes de mélodie autorisée, l'autre (série 2) aux accords correspondant à l'actionnement de chaque note de mélodie, et en ce qu'on positionne le support 1 au voisinage des clés ou touches 5 de l'instrument en fonction de la note de tonalité sélectionnée.

Enfin, dans un autre mode de détermination des notes de mélodie et des notes d'accord à partir d'une note de tonalité, les notes d'accord s'affichent après analyse des fréquences de la note de mélodie jouée.

Les instruments permettant notamment la mise en oeuvre du procédé précité peuvent affecter un grand nombre de formes.

Ces instruments comportent généralement des moyens de saisie ou de sélection d'une note de tonalité et éventuellement d'un mode mineur, majeur ou autre, des premiers moyens de repérage ou d'affichage sélectivement activables à partir de la note de tonalité saisie et éventuellement du mode mineur, majeur ou autre sélectionné pour indiquer visuellement à l'utilisateur la plage de notes de mélodie autorisée et des seconds moyens de repérage ou d'affichage sélectivement activables par actionnement d'une note de mélodie choisie dans la plage de notes de mélodies autorisée pour indiquer à l'utilisateur, à chaque actionnement d'une note de mélodie dans la plage de notes autorisée, les notes d'accord correspondantes. Les premier et second moyens de repérage ou d'affichage peuvent ainsi être constitués d'organes d'affichage lumineux, tels que des diodes électroluminescentes, associés chacun à une touche ou clé de l'instrument.

Ainsi, dans le cas d'un instrument comportant un clavier à touches, chaque touche est équipée d'un organe d'affichage lumineux tel qu'une diode. L'instrument comporte encore des moyens de saisie ou de sélection de la note de tonalité. La note de tonalité peut notamment être établie au moyen d'un analyseur de fréquence ou à partir des connaissances que l'on a du morceau devant être joué ou bien encore de manière totalement aléatoire. Lorsque la note de tonalité et éventuellement le mode mineur, majeur ou autre ont été saisis à l'intérieur de l'instrument, les diodes correspondant à la plage de notes de mélodie autorisée s'allument pour indiquer à l'utilisateur les notes qui peuvent être actionnées. A partir de ces notes de mélodie autorisées, l'utilisateur peut repérer chaque accord par actionnement d'une note de mélodie. Les notes d'accord sont ainsi équipées de la même manière de diodes électroluminescentes qui s'éclairent lorsqu'une note de mélodie est actionnée.

Bien évidemment, la détermination des notes de mélodie autorisées de même que les accords correspondants pourra s'effectuer soit par calcul, soit à partir de données préenregistrées comme cela a d'ores et déjà été mentionné ci-dessus.

Dans le cas d'un instrument pré-équipé en usine, les premiers moyens de repérage et les seconds moyens de repérage ou d'affichage pourront être positionnés directement sur le clavier ou au voisinage des touches dans le cas d'instruments à cordes ou au voisinage des clés dans le cas notamment d'instrument à vent. Toutefois, il peut également être choisi de déporter notamment les seconds moyens de repérage ou d'affichage de manière à faire apparaître les notes d'accord correspondantes non plus directement sur l'instrument mais sur un dispositif d'affichage quelconque tel qu'un écran positionné au voisinage de l'instrument.

Le procédé précité peut également être mis en oeuvre au moyen d'un dispositif associé à un instrument. Ce dispositif associé à l'instrument comporte ainsi des moyens de saisie ou de sélection d'une note de tonalité et éventuellement du mode mineur, majeur ou autre. Il comporte encore des premiers moyens de repérage ou d'affichage prédéterminés, en fonction de la note de tonalité saisie ou sélectionnée, et éventuellement du mode sélectionné pour indiquer visuellement à l'utilisateur une plage de notes de mélodie autorisée sur l'instrument et des seconds moyens de repérage ou d'affichage sélectivement activables par actionnement d'une note de mélodie choisie dans la plage de notes de mélodies autorisée pour indiquer à l'utilisateur l'accord correspondant à chaque note de mélodie jouée. A nouveau, les premiers moyens de repérage ou d'affichage peuvent être disposés au voisinage des touches ou des clés de l'instrument tandis que les seconds moyens de repérage ou d'affichage sont déportés par rapport à l'instrument, ces seconds moyens étant de préférence constitués d'un écran d'affichage de représentations graphiques, ces représentations correspondant chacune à un accord.

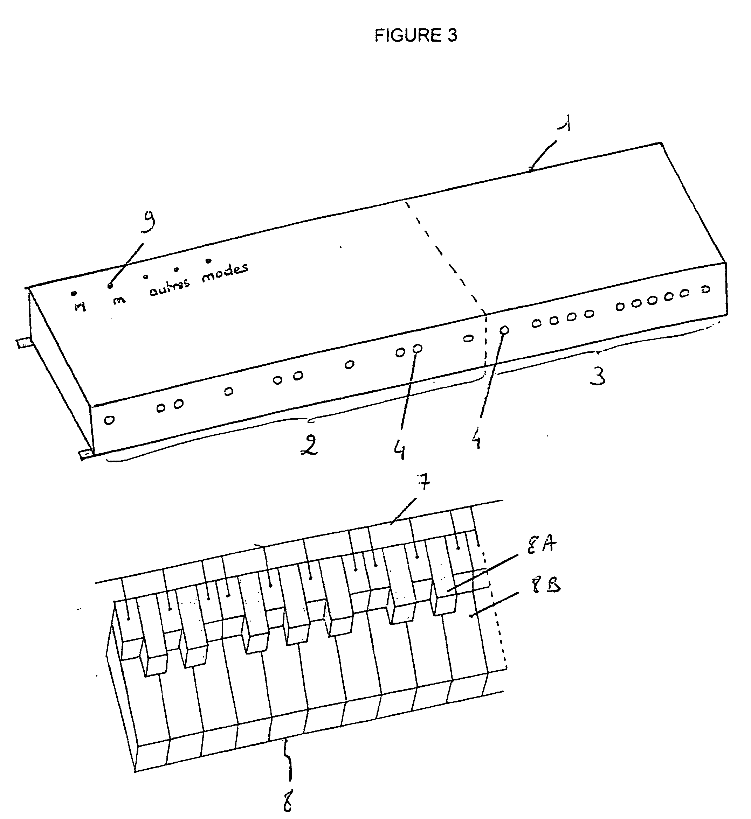

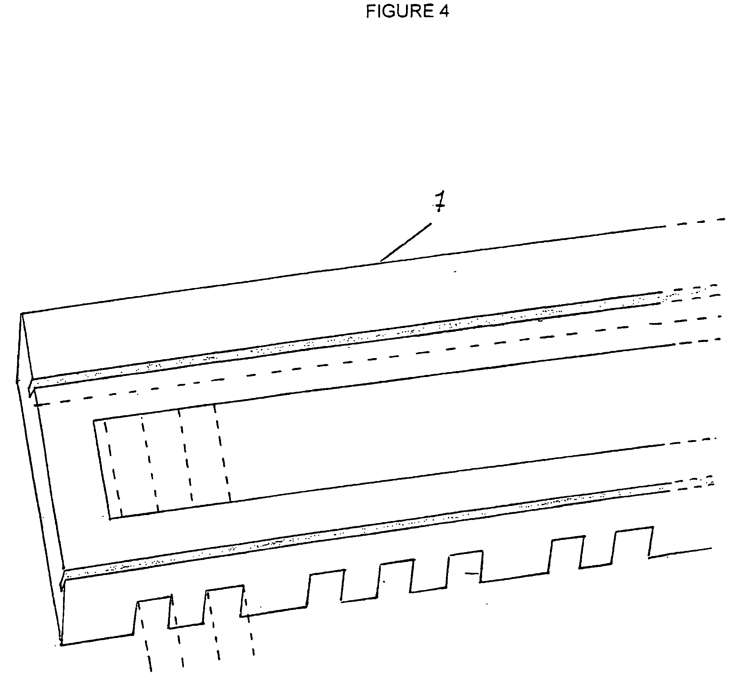

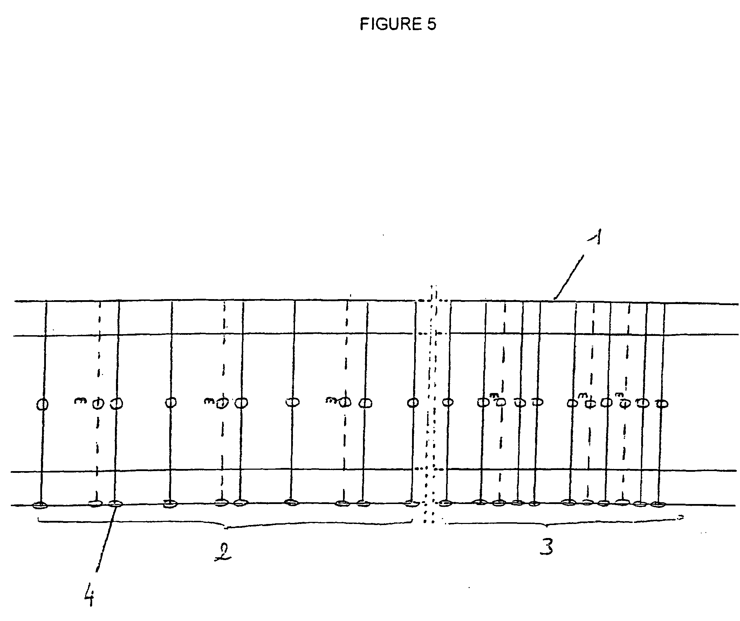

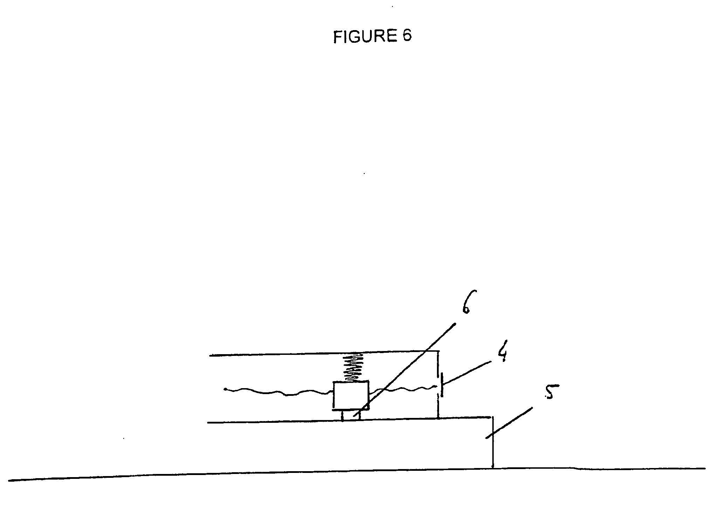

Dans un autre mode de réalisation du dispositif, ce dernier est constitué, comme l'illustrent les figures 3 à 6, d'un premier dispositif 7 dit de compensation représenté aux figures 3 et 4 positionnable sur le clavier 8 de l'instrument pour combler les différences de niveaux entre touches noires 8A et touches blanches 8B et d'un support 1, tel qu'une réglette, monté amovible sur ledit clavier 8 et positionné en fonction de la note de tonalité sélectionnée. Ce support 1 comporte au moins deux séries 2, 3 d'organes lumineux 4 correspondant l'une (série 3) aux moyens de repérage ou d'affichage de la plage de notes de mélodie autorisée, l'autre (série 2) aux accords présélectionnés et au moins une série de capteurs 6 ou contacteurs activables ou respectivement désactivables lors de l'enfoncement d'une touche 8A, 8B du clavier 8 correspondant à une note de mélodie autorisée. Ces capteurs 6 ou contacteurs sont ainsi couplés à la série 2 d'organes 4 lumineux servant au repérage des accords pour provoquer, lors de l'enfoncement d'une touche 8A, 8B de clavier, correspondant à une note de mélodie, l'activation sélective d'un ou plusieurs organes 4 lumineux de la série 2 d'organes lumineux correspondant aux accords présélectionnés. Lorsque la note de tonalité est modifiée, il suffit de déplacer le support 1 le long des touches 8A, 8B du clavier 8 pour repositionner la note de tonalité sélectionnée en regard de la note correspondante du clavier. Dans le cas où un tel dispositif comporte des boutons 9 de sélection de deux modes (mineur ou majeur), un tel dispositif est particulièrement simplifié puisqu'il lui suffit au plus de deux séries d'organes lumineux correspondant aux notes de mélodie en fonction du mode mineur ou majeur et de deux séries d'organes lumineux correspondant aux accords en fonction du mode mineur ou majeur étant entendu que par exemple, pour chaque série, d'organes lumineux correspondant aux notes de mélodie, un grand nombre d'organes lumineux sont communs aux deux séries. Il en sera de même pour les deux séries d'accords. Cette représentation des séries d'organes lumineux est conforme à la figure 5. Bien évidemment, il peut être prévu d'autres modes de fonctionnement que les modes mineur et majeur qui nécessiteront de disposer de nouvelles séries d'organes lumineux.

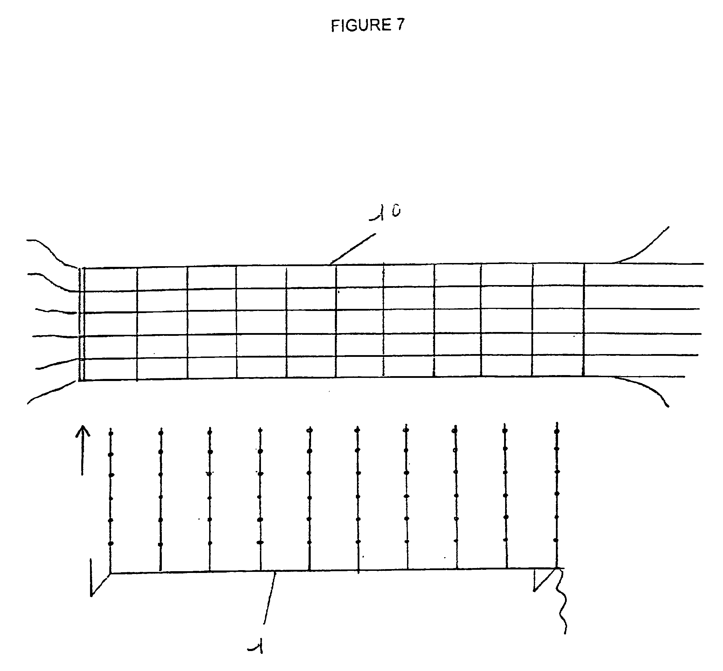

Ce même principe pourra être repris pour d'autres instruments. Ainsi, dans le cas d'une application d'un tel dispositif à une guitare, il suffira simplement d'adapter la forme du support 1 à un corps 10 de guitare comme l'illustre la figure 7. L'accompagnement pourra alors être affiché sur un écran à partir de la détection de chaque note de mélodie actionnée.

Bien évidemment et comme mentionné ci-dessus, si le dispositif comporte des moyens de sélection du mode mineur, majeur ou autre, ces moyens de sélection agiront sur les séries d'organes lumineux en fonction du mode sélectionné.

Bien évidemment, d'autres modes de réalisation plus complexes de dispositifs ou d'instruments permettant la mise en oeuvre du procédé peuvent encore être imaginés. Ainsi, un tel procédé est adaptable à un clavier d'ordinateur pour lequel chaque touche du clavier peut correspondre à une note de musique. De même, le dispositif associé peut incorporer un analyseur de fréquence qui affiche directement l'accord correspondant.

Enfin, le procédé ainsi que l'instrument et le dispositif associé permettant la mise en oeuvre d'un tel procédé peuvent être utilisés par des handicapés mentaux ou par des sourds en adaptant notamment les moyens de repérage et en y associant des couleurs.

## Revendications

1. Procédé, d'aide à la composition ou au jeu musical pour jouer en harmonie une mélodie quelconque sur un instrument de musique, du type comprenant au moins une étape au cours de laquelle on saisit ou on sélectionne, sur l'instrument de musique ou sur un dispositif associé à l'instrument de musique, une note correspondant à la tonalité du morceau devant être joué, suivie d'une étape dans laquelle l'instrument de musique ou le dispositif associé repère ou affiche, en fonction de la note de tonalité saisie ou sélectionnée, une première plage de notes, dites notes de mélodie, correspondant à la plage de notes autorisée pour établir une mélodie,
procédé **caractérisé en ce que**, en outre, à chaque actionnement sur l'instrument de musique d'une note de mélodie dans la plage de notes de mélodie autorisées, l'instrument de musique ou le dispositif associé affiche ou repère sélectivement, en fonction de la note de tonalité saisie ou sélectionnée et de la note de mélodie actionnée à l'intérieur de la plage de notes de mélodie autorisée, une série de notes formant un accord correspondant à la note de mélodie actionnée dans la plage de notes autorisée.

2. Procédé selon la revendication 1,
**caractérisé en ce qu'**on saisit ou on sélectionne en outre le mode tel que le mode mineur, majeur ou autre du morceau et **en ce que** l'instrument de musique ou le dispositif associé repère ou affiche sélectivement, en fonction de la note de tonalité et du mode saisis ou sélectionnés la plage de notes de mélodie autorisée et en fonction de la note de tonalité, du mode sélectionné et de la note de mélodie actionnée, l'accord correspondant.

3. Procédé selon l'une des revendications 1 et 2,
**caractérisé en ce que** l'instrument de musique ou le dispositif associé détermine par calcul à partir de la note de tonalité saisie ou sélectionnée les notes de mélodie et accords correspondants à repérer ou à afficher.

4. Procédé selon la revendication 3,
**caractérisé en ce que** l'instrument de musique ou le dispositif associé sélectionne, à partir de la note de tonalité saisie ou sélectionnée, au moins deux autres notes, les trois notes correspondant chacune à la tonique d'un accord, **en ce qu'**il sélectionne à partir de chaque tonique et en fonction éventuellement du mode mineur, majeur ou autre la médiante et la dominante dudit accord, les notes ainsi obtenues correspondant en outre à la plage de notes de mélodie autorisée, **en ce qu'**il associe chaque note de mélodie à l'un des trois accords et **en ce qu'**il détermine l'emplacement des notes de mélodie et des accords sélectionnés.

5. Procédé selon la revendication 4,
**caractérisé en ce que** l'instrument de musique ou le dispositif associé sélectionne à partir de la note de tonalité deux autres notes correspondant chacune respectivement à la huitième note en amont et en aval de la note de tonalité, note de tonalité incluse, sur la gamme chromatique.

6. Procédé selon l'une des revendications 1 et 2,
**caractérisé en ce que** l'instrument de musique ou le dispositif associé stocke en mémoire, pour chaque note de tonalité apte à être saisie ou sélectionnée, la plage des notes de mélodie autorisée et les accords correspondant à l'actionnement de chaque note de mélodie, **en ce qu'**il compare chaque note de tonalité saisie ou sélectionnée aux notes de tonalité stockées, **en ce que**, lorsque le résultat de la comparaison est positif, il repère ou affiche les notes de mélodie stockées en correspondance de la note de tonalité stockée correspondante et **en ce que**, à chaque actionnement sur l'instrument de musique d'une note de mélodie dans la plage de notes de mélodie autorisées, il repère ou affiche sélectivement une série de notes formant un accord correspondant à la note de mélodie actionnée dans la plage de notes de mélodie autorisées.

7. Procédé selon l'une des revendications 1 et 2,
**caractérisé en ce qu'**on prépositionne sur un dispositif affectant la forme d'un support au moins deux séries d'organes de repérage correspondant pour une note de tonalité prédéterminée, l'une à la plage de notes de mélodie autorisée, l'autre aux accords correspondant à l'actionnement de chaque note de mélodie, et **en ce qu'**on positionne le support au voisinage des clés ou touches de l'instrument de musique en fonction de la note de tonalité sélectionnée.

8. Instrument de musique, notamment pour la mise en oeuvre du procédé conforme à l'une des revendications 1 à 7, cet instrument de musique comportant des moyens de saisie ou de sélection d'une note de tonalité et éventuellement du mode mineur, majeur ou autre, des premiers moyens de repérage ou d'affichage sélectivement activables à partir de la note de tonalité saisie et éventuellement du mode mineur, majeur ou autre sélectionné pour indiquer visuellement à l'utilisateur la plage de notes de mélodie autorisée,
**caractérisé en ce qu'**il comporte en outre au moins des seconds moyens de repérage ou d'affichage sélectivement activables par actionnement sur l'instrument de musique d'une note de mélodie choisie dans la plage de notes de mélodies autorisée, ces seconds moyens de repérage ou d'affichage indiquant à l'utilisateur, à chaque actionnement sur l'instrument de musique d'une note de mélodie dans la plage de notes autorisée, uniquement les notes d'accord correspondant à la note de mélodie actionnée.

9. Instrument de musique selon la revendication 8,
**caractérisé en ce que** les premier et second moyens de repérage ou d'affichage sont constitués d'organes d'affichage lumineux, tels que des diodes électroluminescentes, associés chacun à une touche ou clé de l'instrument de musique, les seconds moyens de repérage ou d'affichage étant activés sélectivement à chaque actionnement d'une touche ou clé de l'instrument de musique correspondant à une note de mélodie choisie à l'intérieur d'une plage de notes de mélodie autorisée par l'intermédiaire de capteurs ou de détecteurs de l'actionnement d'une touche ou clé de l'instrument de musique.

10. Dispositif associé à un instrument de musique,
notamment pour la mise en oeuvre d'un procédé conforme à l'une des revendications 1 à 7, ce dispositif comportant des moyens de saisie ou de sélection d'une note de tonalité et éventuellement du mode mineur, majeur ou autre, des premiers moyens de repérage ou d'affichage prédéterminés fonction de la note de tonalité saisie ou sélectionnée et éventuellement du mode sélectionné pour indiquer visuellement à l'utilisateur une plage de notes de mélodie autorisée sur l'instrument de musique,
**caractérisé en ce qu'**il comporte en outre au moins des seconds moyens de repérage ou d'affichage sélectivement activables par actionnement sur l'instrument de musique d'une note de mélodie choisie dans la plage de notes de mélodie autorisée, ces seconds moyens de repérage ou d'affichage indiquant à l'utilisateur, à l'état activé, l'accord correspondant à la note de mélodie actionnée à l'intérieur de la plage de notes de mélodie autorisée.

11. Dispositif associé pour instrument de musique à clavier à touches selon la revendication 10,
**caractérisé en ce que** les premiers moyens de repérage ou d'affichage sont disposés au voisinage des touches ou des clés de l'instrument de musique tandis que les seconds moyens de repérage ou d'affichage sont déportés par rapport à l'instrument de musique, ces seconds moyens étant de préférence constitués d'un écran d'affichage.

12. Dispositif associé pour instrument de musique à clavier à touches selon l'une des revendications 10 et 11,
**caractérisé en ce qu'**il est constitué d'un premier dispositif (7) positionnable sur le clavier (8) de l'instrument de musique pour combler les différences de niveaux entre touches noires (8A) et touches blanches (8B) et d'un support (1), tel qu'une réglette, monté amovible sur ledit clavier (8) et positionné en fonction de la note de tonalité sélectionnée, ce support comportant au moins deux séries (2, 3) d'organes (4) lumineux correspondant l'une (3) aux moyens de repérage ou d'affichage de la plage de notes de mélodie autorisée, l'autre (2) aux accords présélectionnés et au moins une série de capteurs (6) ou contacteurs activables ou respectivement désactivables lors de l'enfoncement d'une touche du clavier (8) correspondant à une note de mélodie autorisée, ces capteurs (6) ou contacteurs étant couplés à la série d'organes (4) lumineux servant au repérage des accords pour provoquer, lors de l'enfoncement d'une touche de clavier correspondant à une note de mélodie autorisée, l'activation sélective d'un ou plusieurs organes (4) lumineux de la série (2) d'organes (4) lumineux correspondant aux accords présélectionnés pour afficher l'accord correspondant à la note de mélodie jouée.

13. Dispositif associé pour instrument de musique à clavier à touches selon la revendication 12,
**caractérisé en ce qu'**il comporte des moyens de sélection du mode mineur, majeur ou autre, lesdits moyens de sélection agissant sur lesdites séries d'organes lumineux en fonction du mode sélectionné.

## Patentansprüche

1. Hilfsvorgang zum Komponieren oder Spielen eines Musikstücks, um eine beliebige Melodie auf einem Musikinstrument harmonisch zu spielen, von der Art mit mindestens einem Schritt, bei dem auf dem Musikinstrument oder auf einer dem Musikinstrument zugehörigen Vorrichtung eine Note eingegeben oder ausgewählt wird, welche der Tonart des zu spielenden Musikstücks entspricht, gefolgt von einem Schritt, bei dem das Musikinstrument oder die zugehörige Vorrichtung in Abhängigkeit der eingegebenen oder ausgewählten Tonart-Note einen ersten Bereich von Noten - den so genannten Melodienoten - markiert oder anzeigt, welcher dem zur Erstellung einer Melodie zulässigen Notenbereich entspricht, **dadurch gekennzeichnet, dass** ferner bei jeder Betätigung einer Melodienote in dem Bereich von zulässigen Melodienoten auf dem Musikinstrument das Musikinstrument oder die zugehörige Vorrichtung in Abhängigkeit der eingegebenen oder ausgewählten Tonart-Note und der innerhalb des zulässigen Melodienotenbereiches betätigten Melodienote eine Reihe von Noten selektiv anzeigt oder markiert, welche einen Akkord bilden, welcher der in dem zulässigen Notenbereich betätigten Melodienote entspricht.

2. Vorgang nach Anspruch 1, **dadurch gekennzeichnet, dass** ferner das Tongeschlecht des Musikstücks, beispielsweise das Tongeschlecht Moll, Dur o.a., eingegeben oder ausgewählt wird und dass das Musikinstrument oder die zugehörige Vorrichtung in Abhängigkeit der eingegebenen oder ausgewählten Tonart-Note und des eingegebenen oder ausgewählten Tongeschlechts den zulässigen Bereich von Melodienoten in Abhängigkeit der Tonart-Note, des ausgewählten Tongeschlechts und der betätigten Melodienote den entsprechenden Akkord selektiv markiert oder anzeigt.

3. Vorgang nach einem der Ansprüche 1 und 2, **dadurch gekennzeichnet, dass** das Musikinstrument oder die zugehörige Vorrichtung aus der eingegebenen oder ausgewählten Tonart-Note die entsprechenden zu markierenden oder anzuzeigenden Melodienoten oder Akkorde berechnet.

4. Vorgang nach Anspruch 3, **dadurch gekennzeichnet, dass** das Musikinstrument oder die zugehörige Vorrichtung aufgrund der eingegebenen oder ausgewählten Tonart-Note mindestens zwei weitere Noten auswählt, wobei die drei Noten jeweils der Tonika eines Akkords entsprechen, dass es bzw. sie von jeder Tonika ausgehend und eventuell in Abhängigkeit des Tongeschlechts Moll, Dur o.a. die Mediante und die Dominante des genannten Akkords auswählt, wobei die derart erhaltenen Noten ferner dem zulässigen Bereich von Melodienoten entsprechen, dass es bzw. sie jede Melodienote einem der drei Akkorde zuordnet und dass es bzw. sie die Lage der ausgewählten Melodienoten und Akkorde festlegt.

5. Vorgang nach Anspruch 4, **dadurch gekennzeichnet, dass** das Musikinstrument oder die zugehörige Vorrichtung aufgrund der Tonart-Note zwei weitere Noten auswählt, welche auf der chromatischen Tonleiter jeweils der achten Noten über beziehungsweise unter der Tonart-Note einschließlich der Tonart-Note entsprechen.

6. Vorgang nach einem der Ansprüche 1 und 2, **dadurch gekennzeichnet, dass** das Musikinstrument oder die zugehörige Vorrichtung für jede Tonart-Note, die geeignet ist, eingegeben oder ausgewählt zu werden, den zulässigen Bereich der Melodienoten und die Akkorde, die der Betätigung jeder Melodienote entsprechen, speichert, dass es bzw. sie jede eingegebene oder ausgewählte Tonart-Note mit den gespeicherten Tonart-Noten vergleicht, dass es bzw. sie - wenn das Ergebnis des Vergleichs positiv ist - die gespeicherten Melodienoten in Übereinstimmung mit der entsprechenden gespeicherten Tonart-Note markiert oder anzeigt und dass bei jeder Betätigung einer Melodienote in dem Bereich von zulässigen Melodienoten auf dem Musikinstrument es bzw. sie eine Reihe von Noten selektiv markiert oder anzeigt, welche einen Akkord bilden, welcher der in dem Bereich von zulässigen Melodienoten betätigten Melodienote entspricht.

7. Vorgang nach einem der Ansprüche 1 und 2, **dadurch gekennzeichnet, dass** auf einer Vorrichtung, welche die Form eines Trägers aufweist, mindestens zwei Reihen von Markierungsorganen voreingestellt werden, von denen für eine Note mit einer vorbestimmten Tonart die eine dem zulässigen Bereich von Melodienoten entspricht und die andere den der Betätigung jeder Melodienote entsprechenden Akkorden entspricht, und dass der Träger in der Nähe der Schlüssel oder Tasten des Musikinstruments in Abhängigkeit der ausgewählten Tonart-Note platziert wird.

8. Musikinstrument, insbesondere für die Umsetzung des Vorgangs nach einem der Ansprüche 1 bis 7, wobei dieses Musikinstrument Mittel zur Eingabe oder zur Auswahl einer Tonart-Note und eventuell des Tongeschlechts Moll, Dur o.a., erste Mittel zur Markierung oder zur Anzeige, welche von der eingegebenen Tonart-Note und eventuell vom ausgewählten Tongeschlecht Moll, Dur o.a. ausgehend selektiv aktivierbar sind, um für den Benutzer den zulässigen Bereich von Melodienoten optisch anzuzeigen, aufweist, **dadurch gekennzeichnet, dass** es ferner mindestens zweite Mittel zur Markierung oder zur Anzeige aufweist, welche durch Betätigung einer in dem zulässigen Bereich von Melodienoten ausgewählten Melodienote auf dem Musikinstrument selektiv aktivierbar sind, wobei diese zweiten Mittel zur Markierung oder zur Anzeige dem Benutzer bei jeder Betätigung einer Melodienote in dem zulässigen Bereich von Melodienoten auf dem Musikinstrument lediglich die Noten des Akkords angeben, welcher der betätigten Melodienote entspricht.

9. Musikinstrument nach Anspruch 8, **dadurch gekennzeichnet, dass** die ersten und zweiten Mittel zur Markierung oder zur Anzeige aus Leuchtanzeigeorganen, beispielsweise aus LED-Dioden, bestehen, welche jeweils einer Taste oder einem Schlüssel des Musikinstruments zugeordnet sind, wobei die zweiten Mittel zur Markierung oder zur Anzeige bei jeder Betätigung einer Taste oder eines Schlüssels des Musikinstruments, welche einer innerhalb eines zulässigen Bereichs von Melodienoten ausgewählten Melodienote entsprechen, selektiv über Sensoren oder Detektoren einer Betätigung einer Taste oder eines Schlüssels des Musikinstruments aktiviert werden.

10. Einem Musikinstrument zugehörige Vorrichtung, insbesondere für die Umsetzung des Vorgangs nach einem der Ansprüche 1 bis 7, wobei diese Vorrichtung Mittel zur Eingabe oder zur Auswahl einer Tonart-Note und eventuell des Tongeschlechts Moll, Dur o.a., in Abhängigkeit der eingegebenen oder ausgewählten Tonart-Note und eventuell des ausgewählten Tongeschlechts vorbestimmte erste Mittel zur Markierung oder zur Anzeige, um für den Benutzer einen zulässigen Bereich von Melodienoten auf dem Musikinstrument optisch anzuzeigen, aufweist, **dadurch gekennzeichnet, dass** sie ferner mindestens zweite Mittel zur Markierung oder zur Anzeige aufweist, welche selektiv durch Betätigung einer in dem zulässigen Bereich von Melodienoten ausgewählten Melodienote auf dem Musikinstrument aktivierbar sind, wobei diese zweiten Mittel zur Markierung oder zur Anzeige im aktivierten Zustand dem Benutzer den Akkord angeben, welcher der innerhalb des zulässigen Bereichs von Melodienoten betätigten Melodienote entspricht.

11. Zugehörige Vorrichtung für ein Tastatur-Musikinstrument mit Tasten nach Anspruch 10, **dadurch gekennzeichnet, dass** die ersten Mittel zur Markierung oder zur Anzeige in der Nähe der Tasten oder der Schlüssel des Musikinstruments angeordnet sind, während die zweiten Mittel zur Markierung oder zur Anzeige in Bezug auf das Musikinstrument verlagert sind, wobei diese zweiten Mittel bevorzugt durch ein Display gebildet sind.

12. Zugehörige Vorrichtung für ein Tastentastatur-Musikinstrument nach einem der Ansprüche 10 und 11, **dadurch gekennzeichnet, dass** sie aus einer ersten Vorrichtung (7) besteht, welche auf der Tastatur (8) des Musikinstruments positionierbar ist, um die Höhenunterschiede zwischen den schwarzen Tasten (8A) und den weißen Tasten (8B) auszugleichen, sowie aus einem Träger (1), beispielsweise einer Leiste, welcher lösbar auf die genannte Tastatur (8) montiert ist und in Abhängigkeit der ausgewählten Tonart-Note positioniert ist, wobei dieser Träger mindestens zwei Reihen (2, 3) von Leuchtorganen (4) aufweist, von denen die eine (3) den Mitteln zur Markierung oder zur Anzeige des zulässigen Bereichs von Melodienoten entspricht und die andere (2) den vorausgewählten Akkorden entspricht, und mindestens einer Reihe von Sensoren (6) oder Schaltern, welche beim Eindrücken einer Taste der Tastatur (8), welche einer zulässigen Melodienote entspricht, aktivierbar beziehungsweise deaktivierbar sind, wobei diese Sensoren (6) oder Schalter mit der Reihe von Leuchtorganen (4) gekoppelt sind, welche zur Markierung der Akkorde dienen, um beim Eindrücken einer einer zulässigen Melodienote entsprechenden Taste der Tastatur die selektive Aktivierung eines oder mehrerer Leuchtorgane (4) der Reihe (2) von Leuchtorganen (4) zu bewirken, welche den vorausgewählten Akkorden entsprechen, um den der gespielten Melodienote entsprechenden Akkord anzuzeigen.

13. Zugehörige Vorrichtung für ein Tastentastatur-Musikinstrument nach Anspruch 12, **dadurch gekennzeichnet, dass** sie Mittel zur Auswahl des Tongeschlechts Moll, Dur o.a. aufweist, wobei die genannten Auswahlmittel auf die genannten Reihen von Leuchtorganen in Abhängigkeit des ausgewählten Tongeschlechts wirken.

## Claims

1. Method of assisting composition or a musical game in order to play in harmony any melody on a musical instrument, a method of the type comprising at least one step, during the course of which is input or selected, on the musical instrument or on a device associated with the musical instrument, a note corresponding to the tonality of the piece having to be played, followed by a step in which the musical instrument or the associated device locates or displays, in dependence on the tonality note input or selected, a first range of notes, so-called melody notes, corresponding to the permitted range of notes to establish a melody, said method being **characterised in that**, in addition, at each actuation on the musical instrument of a melody note in the range of permitted melody notes, the musical instrument or the associated device displays or locates selectively, in dependence on the tonality note input or selected and on the melody note actuated within the permitted range of melody notes, a series of notes forming a chord corresponding to the melody note actuated in the permitted range of notes.

2. Method according to claim 1, **characterised in that**, in addition, the key such as the minor, major or other key of the piece is input or selected, and **in that** the musical instrument or the associated device locates or displays selectively, in dependence on the tonality note and the key input or selected, the permitted range of melody notes and, in dependence on the tonality note, the key selected and the melody note actuated, the corresponding chord.

3. Method according to one of claims 1 and 2, **characterised in that** the musical instrument or the associated device determines by calculation, from the input or selected tonality note, the corresponding melody notes and chords to be located or displayed.

4. Method according to claim 3, **characterised in that** the musical instrument or the associated device selects, from the tonality note input or selected, at least two other notes, the three notes each corresponding to the tonic of a chord, **in that** it selects, from each tonic and possibly in dependence on the minor, major or other key, the mediant and the dominant of said chord, the notes obtained thereby corresponding, in addition, to the permitted range of melody notes, **in that** it associates each melody note with one of the three chords, and **in that** it determines the location of the melody notes and selected chords.

5. Method according to claim 4, **characterised in that** the musical instrument or the associated device selects, from the tonality note, two other notes, each corresponding respectively to the eighth note above and below the tonality note, including the tonality note, on the chromatic scale.

6. Method according to one of claims 1 and 2, **characterised in that** the musical instrument or the associated device stores in memory, for each tonality note capable of being input or selected, the permitted range of melody notes and the chords corresponding to the actuation of each melody note, **in that** it compares each input or selected tonality note with the stored tonality notes, **in that**, when the result of the comparison is positive, it locates or displays the stored melody notes corresponding to the corresponding stored tonality note, and **in that**, at each actuation on the musical instrument of a melody note in the range of permitted melody notes, it selectively locates or displays a series of notes forming a chord corresponding to the actuated melody note in the range of permitted melody notes.

7. Method according to one of claims 1 and 2, **characterised in that** at least two series of locating members for one predetermined tonality note are prepositioned on a device taking the form of a carrier, one series corresponding to the permitted range of melody notes, and the other series corresponding to the chords corresponding to the actuation of each melody note, and **in that** the carrier is positioned in the vicinity of the keys or touch pads of the musical instrument in dependence on the selected tonality note.

8. Musical instrument, more especially for carrying out the method according to one of claims 1 to 7, this musical instrument comprising means for inputting or selecting a tonality note and possibly the minor, major or other key, and first locating or displaying means, which are selectively actuatable from the input tonality note and possibly from the selected minor, major or other key, in order to indicate visually to the user the permitted range of melody notes, **characterised in that** it comprises, in addition, at least second locating or displaying means, which are selectively activatable by actuation, on the musical instrument, of a melody note selected in the permitted range of melody notes, these second locating or displaying means indicating to the user, at each actuation, on the musical instrument, of a melody note in the permitted range of notes, solely the chord notes corresponding to the actuated melody note.

9. Musical instrument according to claim 8, **characterised in that** the first and second locating or displaying means are made up of luminous display members, such as electroluminescent diodes, each associated with one touch pad or key of the musical instrument, the second locating or displaying means being selectively activated at each actuation of a touch pad or key of the musical instrument, corresponding to a melody note selected within a permitted range of melody notes through the intermediary of sensors or detectors for sensing or detecting the actuation of a touch pad or key of the musical instrument.

10. Device associated with a musical instrument, more especially for carrying out a method according to one of claims 1 to 7, this device comprising means for inputting or selecting a tonality note and possibly the minor, major or other key, and first locating or displaying means predetermined in dependence on the input or selected tonality note and possibly on the selected key, in order to indicate visually to the user a permitted range of melody notes on the musical instrument, **characterised in that** it comprises, in addition, at least second locating or displaying means, which are selectively activatable by actuation, on the musical instrument, of a melody note selected in the permitted range of melody notes, these second locating or displaying means indicating to the user, in the activated state, the chord corresponding to the melody note actuated within the permitted range of melody notes.

11. Associated device for a keyboard musical instrument with touch pads according to claim 10, **characterised in that** the first locating or displaying means are disposed in the vicinity of the touch pads or of the keys of the musical instrument, while the second locating or displaying means are offset relative to the musical instrument, these second means preferably being made up of a display screen.

12. Associated device for a keyboard musical instrument with touch pads according to one of claims 10 and 11, **characterised in that** it is made up of a first device (7), which is positionable on the keyboard (8) of the musical instrument in order to overcome the differences in level between black touch pads (8A) and white touch pads (8B), and a carrier (1), such as a slider, detachably mounted on said keyboard (8) and positioned in dependence on the selected tonality note, this carrier comprising at least two series (2, 3) of luminous members (4), one series (3) corresponding to the means for locating or displaying the permitted range of melody notes, and the other series (2) corresponding to the pre-selected chords, and at least one series of sensors (6) or contactors, which are activatable or respectively disactivatable when a touch pad of the keyboard (8), corresponding to a permitted melody note, is pressed, these sensors (6) or contactors being connected to the series of luminous members (4) which serve to locate the chords in order to induce, when a keyboard touch pad corresponding to a permitted melody note is pressed, the selective activation of one or more luminous members (4) of the series (2) of luminous members (4) corresponding to the pre-selected chords, in order to display the chord corresponding to the melody note played.

13. Associated device for a keyboard musical instrument with touch pads according to claim 12, **characterised in that** it comprises means for selecting the minor, major or other key, said selection means acting on said series of luminous members in dependence on the mode selected.
